# NEUE EUROPÄISCHE PATENTSCHRIFT

(11) **EP 0 314 120 B2**
(45) Veröffentlichungstag und Bekanntmachung des Hinweises auf die Entscheidung über den Einspruch: **02.11.1995**
(45) Hinweis auf die Patenterteilung: 11.09.1991
(21) Anmeldenummer: 88117880.0
(22) Anmeldetag: 27.10.1988
(51) Int. Cl.: E04F 13/14, E04F 13/08, E06B 3/54, E04B 2/96

(54) **Fassadenkonstruktion für Hochbauten**
Facade construction for rising structures
Construction de façade pour constructions élevées

(30) Priorität: 30.10.1987 DE 3737081
(43) Veröffentlichungstag der Anmeldung: 03.05.1989
(73) Patentinhaber: Metallbau Koller GmbH i.K., D-79588 Efringen-Kirchen (DE)
(72) Erfinder: Weiss, Günther, Dipl.-Phys., D-7858 Weil am Rhein (DE)
(74) Vertreter: Ernicke, Hans-Dieter, Dipl.-Ing.

(56) Entgegenhaltungen:
- EP-A- 0 192 472
- EP-A- 0 201 212
- EP-A- 0 221 262
- CH-A- 609 407
- DE-A- 3 514 445
- DE-A- 3 541 730
- DE-A- 3 621 010
- DE-C- 3 420 696
- DE-U- 8 701 693
- GB-A- 547 838
- NL-A- 76 528
- "Feinmechanische Bauelemente" von Prof. Hildebrand, VEB Verlag Technik 1967

## Beschreibung

Die Erfindung befaßt sich mit einer Fassadenplatte zur Bildung einer Fassadenkonstruktion für Hochbauten mit einer aus einem Einscheiben-Sicherheitsglas bestehenden Scheibe, in welcher Löcher zur formschlüssigen Aufnahme von über die Plattenrückseite vorstehende Verankerungsbolzen vorgesehen sind, die mit einer Unterkonstruktion verbindbar sind.

Eine solche Fassadenkonstruktion ist durch die DE-U-8701693 bekannt, bei der eine Fassadenplatte aus zwei durch eine Kunststoffschicht miteinander verklebten Glasscheiben gebildet wird. Die der Gebäudeaußenwand zugekehrte Glasscheibe besteht aus einem Sicherheitsglas, welches drei konische Bohrungen aufweist, in die jeweils eine konische Buchse zur Aufnahme eines konischen Schraubenbolzens eingreift Die auf der dem Gebäude zugekehrten Plattenrückseite vorstehenden Schraubenbolzen wirken mit metallischen Befestigungselementen zusammen. Die an der Plattenvorderseite sichtbaren Schraubenköpfe werden von der Frontalscheibe überdeckt, welche mit einer optisch wirksamen Beschichtung versehen ist. Das Verkleben beider Scheiben kann erst nach dem Einsetzen der Schraubenbolzen vorgenommen werden.

Würde man die vorbekannte Fassadenplatte einscheibig ausführen, könnte die gestellte Aufgabe der vollkommen unsichtbaren Befestigung nicht gelöst werden, weil dann zumindest die Schraubenköpfe und die Buchsen sichtbar wären. Außerdem ist eine drehschlüssige Befestigung der Schraubenbolzen in der Scheibenbohrung nicht gegeben. Hinsichtlich der Befestigung der vorbekannten Fassadenplatte am Gebäude zeigt die DE-U-8701693 nur eine zeichnerisch angedeutete Schiebeführung des metallischen Befestigungselementes an einem bolzenartigen Anker, was für eine korrekte Erstellung einer Fassade keineswegs ausreichend ist.

Eine anders ausgebildete Fassadenkonstruktion ist dem DE-U-8704683.0 als bekannt zu entnehmen. Danach soll die Sicherheit von Fassadenkonstruktionen, deren aus Isolierglas hergestellte Fassadenelemente lediglich an der Unterkonstruktion angeklebt sind, dadurch erhöht werden, daß der seitliche, vertikale Rand des mindestens zweischeibigen Isolierglases durch U-förmig gestaltete Laschen aus Metall oder Kunststoff außenseitig umgriffen wird, wobei die Laschen mit der Unterkonstruktion in geeigneter Weise fest zu verbinden sind. Solche Konstruktionen setzen voraus, daß die Last der Fassadenplatten von Konsolen aufgefangen werden muß, was zwangsläufig zu verhältnismäßig breiten Fugen zwischen den einzelnen Fassadenplatten führt. Da der einzelne Schenkel der Laschen in den zwischen zwei Scheiben des Isolierglases befindlichen Hohlraum eingreift, wird überdies nicht verhindert, daß die außenliegende Scheibe allein aufgrund ihrer Verklebung mit der innenliegenden Scheibe gehalten werden muß.

Diese Schwierigkeiten werden mit einer Fassadenkonstruktion nach der älteren EP-A 87810127.8 verhindert, welche noch nicht vorveröffentlicht ist Auch dort müssen zweischeibige Isoliergläser an der Unterkonstruktion abgestützt werden, zu welchem Zweck die innenliegende Glasscheibe gegenüber der außenliegenden zurückversetzte Ränder aufweist Beide Glasscheiben sind mit der Unterkonstruktion verklebt, wobei in die seitlichen, vertikalen Randbereiche der außenliegenden Glasscheibe Schlitze eingefräst sind, in welche ebenfalls U-förmige Laschen eingreifen und damit die Glasscheibe formschlüssig an der Unterkonstruktion sichern. Der Abstand zwischen den Fassadenplatten ist dabei aber immer noch beachtlich und wird bestimmt durch die Wandstärke der gegenüber angeordneten Laschen sowie durch die dazwischen befindliche und notwendige Fugenabdichtung.

Der Erfindung liegt die Aufgabe zugrunde, die genannten Probleme der vorbekannten Fassadenkonstruktionen zu vermeiden und eine Fassadenplatte aufzuzeigen, bei der die Verkehrssicherheit durch die Befestigung der außenliegenden Scheibe an der Unterkonstukltion wesentlich erhöht und der Abstand zwischen den Rändern benachbarter Fassadenplatten ohne Erkennbarkeit der Befestigungsmittel verringert ist.

Die erfindungsgemäße Lösung der gestellten Aufgabe ergibt sich aus den kennzeichnenden Merkmalen des Hauptanspruchs.

Die Verwendung thermisch vorgespannter Einscheiben-Sicherheitsglasplatten hat gegenüber dem vorbekannten, Isolierglas erhebliche Vorteile hinsichtlich ihrer Festigkeit und Verformbarkeit Man kann die Löcher, Nuten, Bohrungen oder dgl. Öffnungen, in welche die Verankerungsbolzen formschlüssig einzusetzen sind, ohne Gefahr der Beschädigung der Fassadenplatten einbringen, indem man diese Bearbeitung vordem Härten der Einscheiben-Sicherheitsglas- Platten durch Bohren oder/und Fräsen oder dgl. durchführt.

Es wäre allerdings die Anwendung solcher Einscheiben-Sicherheitsglasplatten bei Fassadenkonstruktionen der vorher beschriebenen bekannten Art mit in den Rand der Scheiben eingreifenden Laschen unzweckmäßig, wenn nicht gar riskant weil die Durchbiegung einer solchen Einscheiben-Platte unter Winddruck oder -sog die Gefahr mit sich bringt, daß die abgewinkelten Laschenschenkel aus den seitlichen Einfräsungen der Scheibe zufolge der Scheibenbiegung gleiten können und somit eine formschlüssige Sicherung nicht mehr gewährleistet ist

Bei der erfindungsgemäßen Lösung ist hingegen die Möglichkeit gegeben, die fest in die Fassadenplatte eingebauten Verankerungsbolzen so mit der Unterkonstruktion zu verbinden, daß diese nicht nur den nötigen Formschluß, gegebenenfalls zusätzlich zur Randverklebung der Fassadenplatte, bei allen Lastverformungen sicherstellt, sondern auch darüberhinaus noch in der Lage ist, die Last der einzelnen Fassadenplatte aufzunehmen, so daß ein Unterfangen des unteren Plattenrandes entbehrlich wird.

Die erfindungsgemäß angeordneten Verankerungsbolzen halten in jedem Fall die außenliegende Scheibe der Fassadenplatte mechanisch fest, ohne von der Vorderseite der Fassadenplatte her sichtbar zu sein. Je nachdem, welche Raumform die einzelne Ausnehmung hat, z.B. hinterschnittenes Sackloch oder schwalbenschwanzförmig gefräste Nut, sind die einzusetzenden Verankerungsbolzen ein- oder mehrteilig zu gestalten. Wichtig ist, daß die Verankerungsbolzen durch Zwischenfügung einer Klebemasse sowohl drehschlüssig als auch druck- und zugfest, also starr, gehalten sind und außerdem unmittelbarer Berührungskontakt zwischen Glas und Metall vermieden wird.

Um Korrosionen oder sonstige materialbedingte schädliche Auswirkungen zu verhindern, ist es erforderlich, die Verankerungsbolzen gemäß Anspruch 7 aus korrosionsbeständigem Metall, beispielsweise aus Edelstahl, zu fertigen, soweit dieses Material für Verankerungsmittel bauaufsichtlich zugelassen ist.

Gegenstand der Erfindung ist außerdem eine Fassadenkonstruktion nach den Ansprüchen 8 bis 13 die eine vorteilhafte Weiterentwicklung der Lehre nach dem Hauptanspruch darstellt, von dieser Erfindung jedoch auch unabhängig ausgeführt werden kann, wobei die gleiche Aufgabe auf andere Weise gelöst wird.

Die erfindungsgemäß andere Lösung der Aufgabe besteht darin, daß die Fassadenplatte über die Verankerungsbolzen mit der einen Seite von Schwingmetallkörpern verbunden ist, wohingegen die andere Seite der Schwingmetallkörper an der Unterkonstruktion befestigbar ist.

Mit den Ansprüchen 9 bis 13 werden unterschiedliche Gestaltungen der Schwingmetallkörper und entsprechende Verbindungsmöglichkeiten der Fassadenplatte mit der Unterkonstruktion unter Einbeziehung der Schwingmetallkörper beschrieben.

Diese Schwingmetallkörper haben den Vorteil, daß sie die Fassadenplatte in idealer Weise gelenkig halten, wodurch die Fassadenplatte die Möglichkeit hat, den verschiedenen Belastungen in gewissem Umfang nachzugeben, was zur Verformung der Schwingmetallkörperführt, die aus ihrer Verformung eine Rückstellkraft entwickeln, um die Fassadenplatte wieder in die Ausgangslage zurückzustellen, wenn die Windkräfte nachlassen. Damit können unterschiedlich einwirkende Winddruckkräfte ebenso wie die Last der Fassadenplatte aufgefangen werden, ohne daß diese Beanspruchungen sich auf die Verankerung der Verankerungsbolzen in der Einscheiben- Sicherheitsglas-Platte schädlich auswirken.

Damit wird auch die Möglichkeit geschaffen, die so ausgestaltete Fassadenplatte an der Unterkonstruktion oder am Trägerrost verklebungsfrei zu befestigen, wie es selbstverständlich auch möglich ist, eine Klebeverbindung zwischen der Fassadenplatte und dem einzelnen Schwingmetallkörper oder sogar mit einer den rückseitigen Randbereich der Fassadenplatte abstützenden, rahmenartigen Unterkonstruktion herbeizuführen.

Gemäß den Ansprüchen 14 und 15 st auch eine Kombination der vorgespannten Einscheiben-Sicherheitsglas-Platte mit einem rückseitig angeordneten Isolierglas möglich.

In allen Fällen ergibt sich der Vorteil, daß der Verbund der Sicherheitsglasplatte mit der Unterkonstruktion werkseitig vorgenommen werden kann, so daß an der Baustelle nur noch die Montage dieses Verbundes mit dem an der Gebäudeaußenseite befindlichen Trägetrost von der Gebäudeinnenseite her vorgenommen zu werden braucht.

Die Erfindung läßt somit die verschiedenartigsten Baukonstruktionen zu, bei denen in jedem Fall sichergestellt ist daß eine Klebeverbindung durch formschlüssige Bolzenverbindung absolut gesichert wird, was die Voraussetzung für eine bauaufsichtliche Zulassung solcher Fassadenkonstruktionen ist.

Einzelheiten der Erfindung sind in den Zeichnungen schematisch und beispielsweise dargestellt Es zeigen:
- Fig. 1:: eine teilweise Frontalansicht einer Fassadenkonstruktion mit durch Verankerungsbolzen gehaltenen Fassadenplatten,
- Fig. 2:: einen Horizontalschnitt nach der Linie II-II durch die Fassadenkonstruktion gemäß Fig. 1,
- Fig. 3:: einen Vertikalschnitt durch eine Verbindungsstelle zwischen Fassadenplatte und Unterkonstruktion,
- Fig. 4:: einen Horizontalschnitt nach der Linie IV-IV durch die Verbindungsstelle gemäß Fig. 3,
- Fig. 5 :: einen Vertikalschnitt einer alternativen Verbindungsstelle zu Fig. 3,
- Fig. 6 :: einen Vertikalschnitt durch den Verankerungsbolzen nach der Linie VI-VI gemäß Fig. 5,
- Fig. 7 + 8 :: Draufsicht auf und Längsschnitt durch ein in die Fassadenplatte eingebrachtes Sackloch,
- Fig. 9 :: einen Vertikal-Teilschnitt durch eine Verbindungsstelle mit einem leistenförmigen Schwingmetallkörper,
- Fig. 10 :: einen Vertikalschnitt durch eine alternative Verbindungsstelle zu Fig. 9 mit einem zylinderförmigen Schwingmetallkörper,
- Fig. 11 :: einen Horizontal-Teilschnitt durch eine Verbindungsstelle bei einer Isolierglas-Fassadenplatte und
- Fig. 12 :: einen Teilschnitt durch einen Verbund zwischen einer Sicherheitsglasplatte und einem Isolierglas.

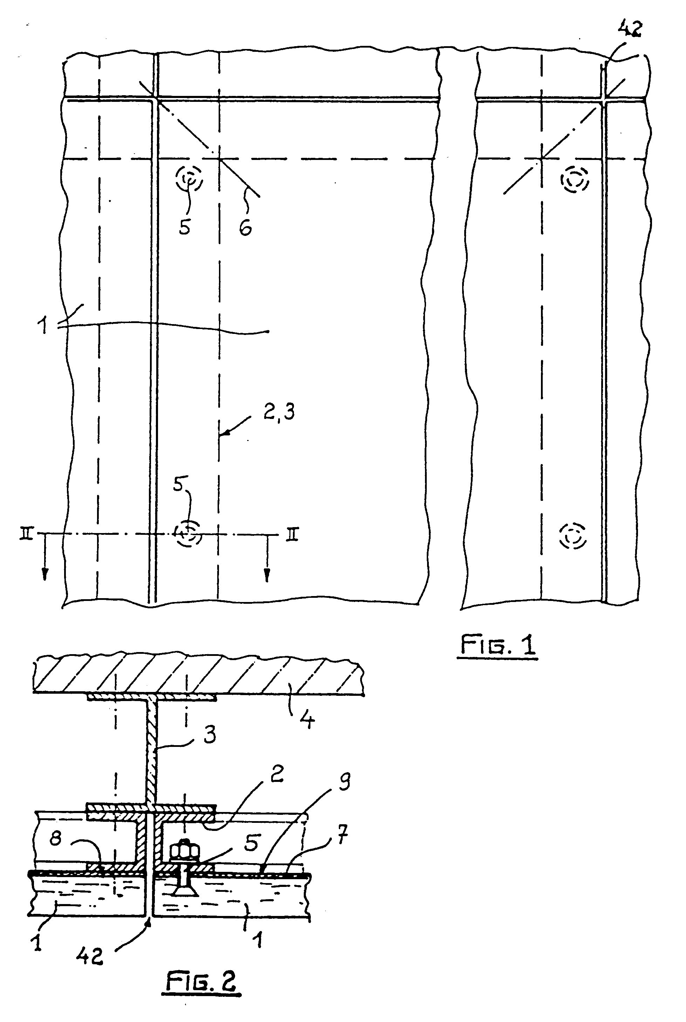

Im Ausführungsbeispiel der Figuren 1 und 2 sind die Frontansicht und der Horizontalschnitt durch Teile einer Fassadenkonstruktion gezeigt, bei der von außen nicht sichtbar ist, wie die einzelnen Fassadenplatten (1) an ihrer Unterkonstruktion (2) bzw. am Trägerrost (3) befestigt sind, wobei ganz schematisch davon ausgegangen wird, daß der Trägerrost (3) als gitterförmiges Werk mit der Außenfront eines Gebäudes (4) fest verbunden ist, wohingegen die Fassadenplatte (1) werkseitig mit der Unterkonstruktion (2) verbunden wird. An der Baustelle ist daher nur noch die Montage dieses Verbundes am Trägerrost (3) erforderlich.

Im gezeigten Ausführungsbeispiel wird davon ausgegangen, daß die einzelne Fassadenplatte (1) aus einer Einscheiben-Sicherheitsglas-Platte besteht Die einzelne Fassadenplatte (1) wird an der Unterkonstruktion (2) oder am Trägerrost (3) mit Hilfe von Verankerungsbolzen (5) befestigt, die in der Fassadenplatte (1) formschlüssig und starr festgehalten sind. Dieser Einbau geschieht im Ausführungsbeispiel werkseitig. Geeignete Ausführungsbeispiele werden nachstehend beschrieben.

Danach ist die Plattenrückseite (9) im Randbereich (8) der Fassadenplatte (1) mit der Unterkonstruktion (2) durch eine Klebeschicht (7) verbunden. Um die Sicherheit dieser Klebeverbindung entscheidend zu verbessern, wird durch die Bolzenverbindung (5) ein nur durch Zerstörung der Platte trennbarer Formschluß zwischen der Unterkonstruktion (2) und der Fassadenplatte (1) herbeigeführt.

Man erkennt, daß die Fugen (42) zwischen den Fassadenplatten (1) verhältnismäßig klein sein können und durch nicht dargestellte Dichtmassen ausgefüllt werden können. Zugleich ist verständlich, daß eine so befestigte Fassadenplatte (1) keine Abstützung an ihrem unteren Rand gegenüber der Unterkonstruktion (2) benötigt, wenngleich die Erfindung nicht ausschließt, daß solche Abstützungen, beispielsweise im Bereich zurückversetzter Stellen der Unterkonstruktion (2) durchaus vorgesehen werden können.

In Fig. 1 ist überdies gezeigt, daß die Lage des einzelnen Verankerungsbolzens (5) im Eckenbereich der Fassadenplatte (1) unsymmetrisch sein soll. Mit (6) ist eine Winkelhalbierende symbolisch dargestellt, wobei wichtig ist, daß der Verankerungsbolzen (5) abseits von dieser Winkelhalbierenden (6) angeordnet ist. Eine solche Maßnahme hat festigkeitssteigernde Wirkung, besonders dann, wenn der Verankerungsbolzen (5)― wie später beschrieben― die Last der Fassadenplatte sowie die von außen einwirkenden Druck- bzw. Sogkräfte anteilig aufzunehmen hat.

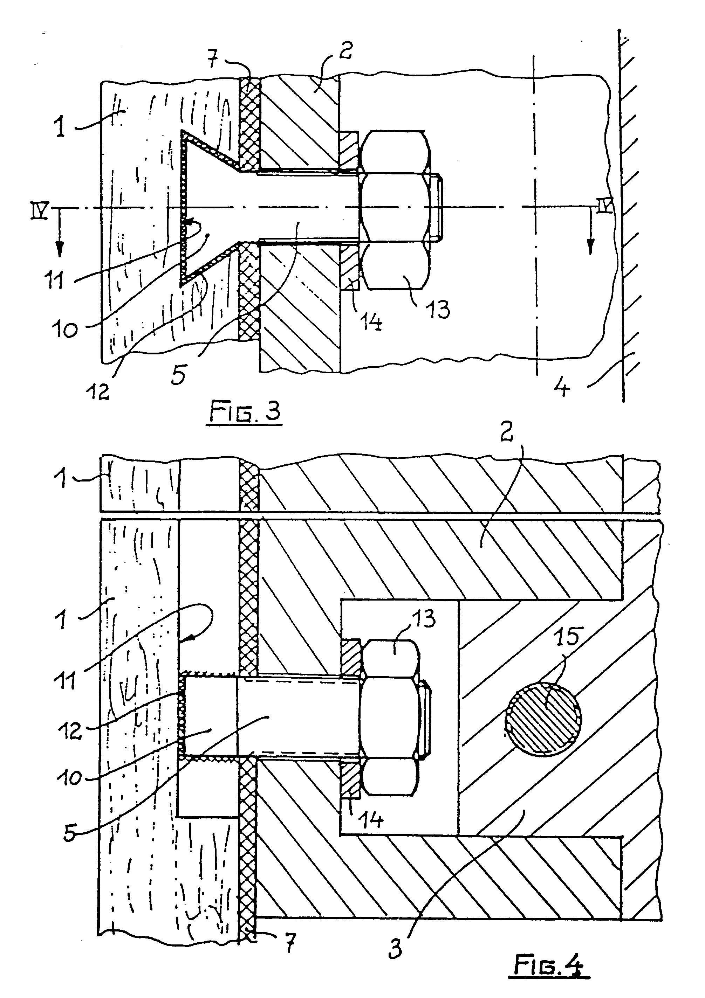

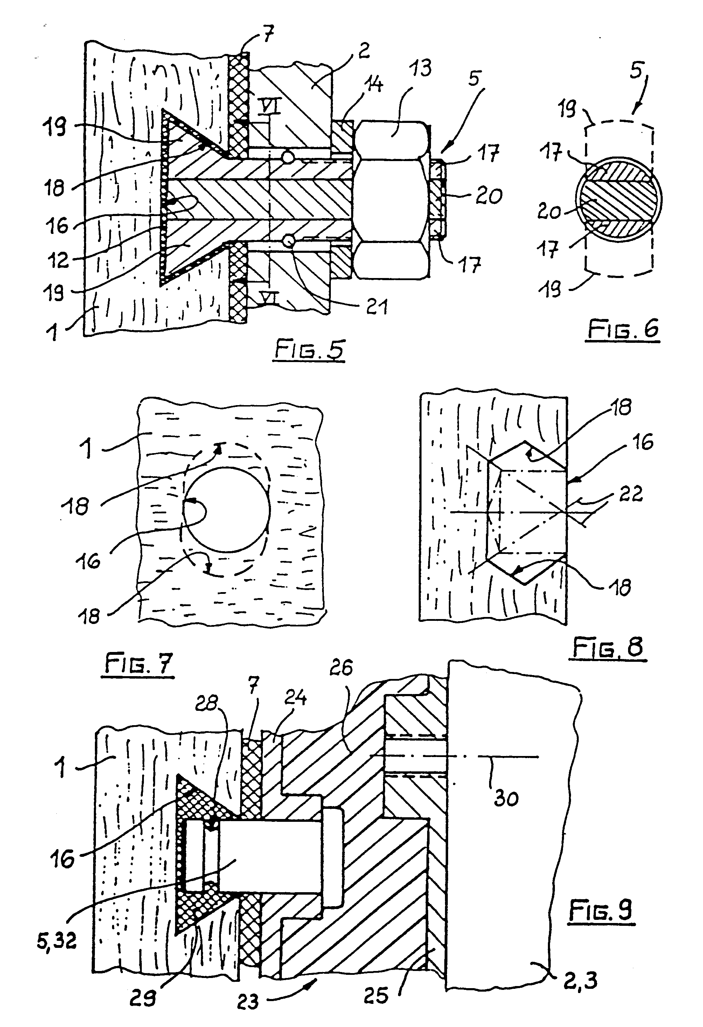

Im Ausführungsbeispiel der Fig. 3 und 4 ist gezeigt, daß der einzelne Verankerungsbolzen (5) mit seinem Bolzenkopf 10) in einer vorn seitlichen, vertikalen Rand der Fassadenplatte (1) eingefrästen, schwalbenschwanzförmigen Nut (11) festgelegt ist . Zwischen dem Bolzenkopf (10) und den Grundflächen der schwalbenschwanzförmigen Nut (11) ist eine Klebemasse (12) eingefügt, die den Verankerungsbolzen (5) starr in der Fassadenplatte (1) festiegen und andererseits den direkten Berührungskontakt des Bolzenkopfes (10) gegenüber den Grundflächen der schwalbenschwanzförmigen Nut (11) verhindern soll. Es ist darauf zu achten, daß diese Verankerung drehschlüssig sowie druck- und zugfest ist. Zwischen der Fassadenplatte (1), d.h. zwischen dem Randbereich (8) der Plattenrückseite (9) und der Unterkonstruktion (2), ist eine Klebeschicht (7) eingefügt, die werkseitig vorgenommen wird und eine zusätzliche Verbindung zwischen der Fassadenplatte (1) und der Unterkonstruktion (2) herbeiführt.

Um diese werkseitig herzustellende Baueinheit mit dem Trägerrost (3) montagermäßig verbinden zu können, schlägt das Ausführungsbeispiel der Fig. 4 symbolisch eine Verschraubung (15) vor. Wie man solche Verschraubungen konstruktiv gestalten kann, geht beispielsweise aus der EP-A 87810127.8 hervor.

Daraus ergibt sich der Vorteil, daß die Baueinheit der miteinander verbundenen Fassadenplatte (1) und der Unterkonstruktion (2) am Gebäude (4) lediglich in passende Verankerungen auf- oder eingeschoben zu werden brauchen, um dann von der Rückseite her einen geeigneten Verbindungsschluß, z.B. am Trägerrost (3), herbeizuführen.

Mit dem Ausführungsbeispiel der Fig. 5 bis 8 wird gezeigt, daß man einen Verankerungsbolzen (5) auch über ein hinterschnittenes Sackloch (16) formschlüssig in die Fassadenplatte (1) einsetzen kann. Bei Anwendung einer Einscheiben- Sicherheitsglas- Platte wird ein solches Sackloch (16) ebenso wie die Nut (11) des Beispieles der Fig. 3, 4 durch Bohren oder/und Fräsen vorgenommen, bevor die Einscheiben- Sicherheitsglas-Platte gehärtet, d.h. thermisch vorgespannt wird.

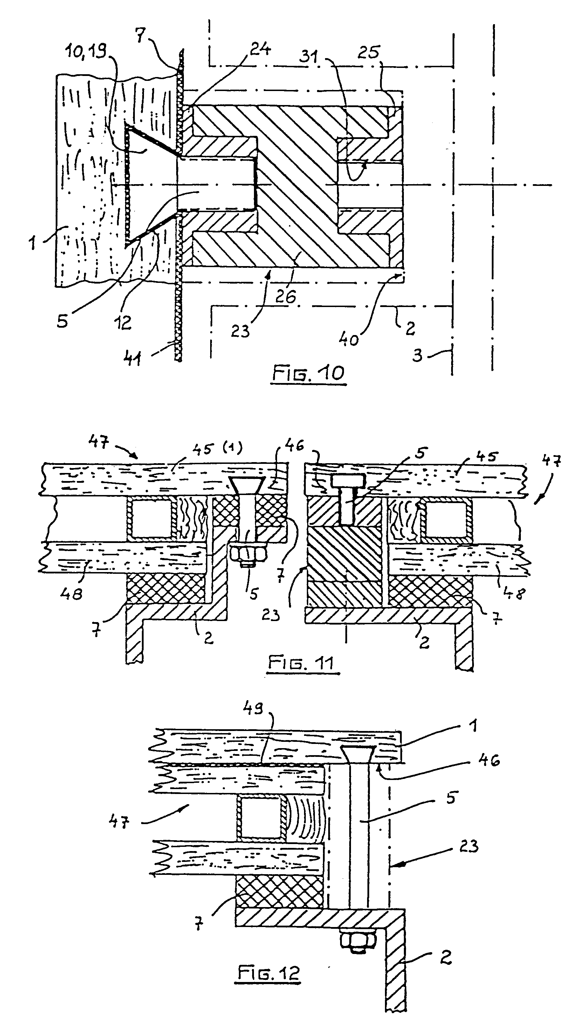

Gemäß dem Beispiel der Fig. 7 und 8 kann man beispielsweise zunächst ein zylindrisches Sackloch (16) rechtwinklig zur Außenfläche der Fassadenplatte (1) einbohren, woraufhin man zwei schräge Bohrungen entlang den Achsen (22) gemäß Fig. 8 durchführt Damit der Bohrer bei diesen schrägen Bohrungen nicht verläuft, wird nach herkömmlicher Art in das Sackloch (16) eine Lehre zum Führen des Bohrers eingesetzt. Die durch senkrechtes und schräges Bohren hergestellte, hinterschnittene Ausnehmung (16, 18) weist dann etwa die Form der Fig. 8 auf.

Es ist aber auch möglich, zunächst ein Sackloch zu bohren und danach die Hinterschneidung auszufräsen.

In ein solches hinterschnittenes Sackloch ist ein einteiliger Verankerungsbolzen (5) nicht einsetzbar, es sei denn, daß man ihn nach Art eines Bajonettverschlusses oder eines Spreizankers ausbildet, was die Erfindung nicht ausschließt.

Wenn man aber darauf Wert legt, den Bolzenkopf ausfüllend in die Hinterschneidung (18) des Sackloches (16) einzuführen, dann kann man gemäß Fig. 5 und 6 den Verankerungsbolzen (5) mehrteilig gestalten. Die beiden außenliegenden Bolzenteile (17) weisen je einen seitlichen Kopfvorsprung (19) auf, der passend zur Hinterschneidung (18) des Sackloches (16) gestaltet ist Zwischen diesen beiden außenliegenden Bolzenteilen (17) befindet sich ein mittlerer Bolzenteil (20), der lediglich Spreizaufgabe besitzt. Man führt zunächst jeden außenliegenden Bolzenteil (17) für sich in das Sackloch (16) und in die Hinterschneidung (18) ein und distanziert die Bolzenteile (17) voneinander. In den dadurch gebildeten Zwischenraum wird der mittlere Bolzenteil (20) von der Stirnseite her eingeführt, der damit die außenliegenden Bolzenteile (17) spreizt und zur Anlage an den Hinterschneidungen (18) bringt. Zuvor ist die Klebemasse (12) eingeführt worden, welche im vorliegenden Fall im wesentlichen die unmittelbare Berührung von Metall und Glas verhindert, den Verankerungsbolzen (5) starr festlegt, wohingegen die Drehschlüssigkeit durch die Form des Sackloches (16) und des Verankerungsbolzens (5) herbeigeführt wird.

Die Fig. 9 und 10 neigen nun eine Ausführungsvariante der Erfindung, die nicht unbedingt voraussetzt, daß die Fassadenplatte (1) mit der Unterkonstruktion (2) verklebt sein muß, die aber eine punktförmige Aufnahme der Last der Fassadenplatte (1) über die Verankerungsbolzen (5) ermöglicht, ohne daß schädliche Momente in die Fassadenplatte (1) eingetragen werden können.

Beim Ausführungsbeispiel der Fig. 9 ist der Verankerungsbolzen (5) Bestandteil eines leistenförmigen Schwingmetallkörpers (23), der in üblicher Weise aus zwei voneinander distanzierten Metallteilen (24, 25) besteht, die miteinander formschlüssig durch einen elastischen Teil (26), insbesondere aus synthetischem Kautschuk (Neoprene (Wz)), besteht, Der Verankerungsbolzen (5, 32) ist in dem außenliegenden Metallteil (34) einvulkanisiert, wobei eine Schulter (27) Formschluß sicherstellt. In einer Variante hierzu kann der einzelne Verankerungsbolzen (5, 32) auch in ein vorhandenes Gewinde des Schwingmetallkörpers (23) eingeschraubt sein. Der Schwingmetallkörper (23) wird mit den Verankerungsbolzen (32) in hinterschnittene Sacklöcher (16) der Fassadenplatte (1) eingesetzt, wodurch sich aber zunächst kein Formschluß ergeben kann. Nach der Erfindung sind jedoch diese Sacklöcher (16) mit einer Klebstoffmasse (29) ausgefüllt, die nach dem Einsetzen der Verankerungsbolzen (32) aushärtet Damit eine formschlüssige Einbettung der Verankerungsbolzen (32) in der Klebstoffmasse (29) erfolgen kann, weist der Verankerungsbolzen (32) eine oder mehrere Schaftverjüngungen (28) auf. Unter Zugbelastung stützen sich die Klebstoffmassen (29) an den Hinterschneidungen des Sackloches (16) und an der Schaftverjüngung (28) ab und legen damit den Verankerungsbolzen (32) untrennbar fest.

Die Fig. 9 zeigt zwar eine Klebeschicht (7) zwischen der Rückseite der Fassadenplatte (1) und dem Schwingmetallkörper (23), welche aber nicht unbedingt vorhanden sein muß.

Der Schwingmetallkörper (23) wird seinerseits mit der Unterkonstruktion (2) oder/und dem Trägerrost (3) durch geeignete Verbindungsmittel (30), die symbolisch dargestellt sind, befestigt, wobei es durchaus denkbar ist, daß als Verbindungsmittel sich gegenseitig hintergreifende, hakenartige Beschläge verwendet werden können, die lediglich ein Einhängen der Fassadenplatte (1) mit dem Schwingmetallkörper (23) an einer Unterkonstruktion (2) oder/und am Trägerrost (3) nötig machen.

Beim Beispiel der Fig. 10 ist gezeigt, daß der einzelne Verankerungsbolzen (5) mit einem einzelnen Schwingmetallkörper (23) verbunden wird. Dies kann beispielsweise dadurch geschehen, daß der Verankerungsbolzen (5) in einer der vorher beschriebenen Möglichkeit starr in der Fassadenplatte (1) festgelegt wird und mit seinem Gewindeteil über die Rückseite der Fassadenplatte (1) vorragt, Der mit einer Gewindebohrung (31) versehene, außenliegende Metallteil (24) des Schwingmetallkörpers (23) wird nun auf diesen Schraubteil des Verankerungsbolzens (5) aufgeschraubt, wobei durchaus auch eine Verklebung der Stirnfläche des Schwingmetallkörpers (23) mit der Rückseite der Fassadenplatte (1) herbeigeführt werden kann. Werkseitig wird dann die Fassadenplatte (1) mit den darin eingebetteten Verankerungsbolzen (5) und den darauf aufgeschraubten Schwingmetallkörpern (23) geliefert, sofern diese mit der Fassadenplatte (1) verklebt werden.

Der andere Metallteil (25) des Schwingmetallkörpers (23) wird mit einer Unterkonstruktion (2) oder einem Trägerrost (3) in geeigneter Weise verbunden.

Das Ausführungsbeispiel der Fig. 11 zeigt eine Fassadenplatte (1) nach Art eines Isolierglases. Die Frontalscheibe (45) dieses Isolierglases (47) besteht aus einem thermisch vorgespannten Sicherheitsglas und nimmt die Verankerungsbolzen (5) in irgendeiner der vorbeschriebenen Art oder dgl auf. Die innenliegende Scheibe (48) ist am Rand zurückversetzt, damit der im vorstehenden Bereich (46) festgelegte Verankerungsbolzen (5) seitlich vorbeigeführt werden kann. Diese Stufung bringt die Möglichkeit, beide Scheiben (45, 48) aus der Unterkonstruktion (2), die ebenfalls gestuft ist, über Klebeschichten (7) zu verankern.

Es ist aber auch möglich, wie der rechte Teil der Fig. 11 zeigt, die außenliegende Scheibe (47) über einen Schwingmetallkörper (23) und die innenliegende Scheibe (48) über die Klebeschicht (7) mit der Unterkonstruktion zu verbinden.

Im Fall der Fig. 12 ist ein zweischeibiges Isolierglas (47) außenseitig mit einer thermisch vorgespannten Sicherheitsglasplatte (1) über eine Schicht (49) kombiniert. Das Isolierglas (47) ist über die Klebeschicht (7) mit der Unterkonstruktion (2) verbunden. Die Sicherheitsglasplatte (1) ist über die Verankerungsbolzen (5) mit der Unterkonstruktion (2) verschraubt, wobei auch in diesem Fall Schwingmetallkörper eingesetzt werden können.

### STÜCKLISTE

- (1): Fassadenplatte
- (2): Unterkonstruktion
- (3): Trägerrost
- (4): Gebäude
- (5): Verankerungsbolzen
- (6): Winkelhalbierende
- (7): Klebeschicht
- (8): Randbereich
- (9): Plattenrückseite
- (10): Bolzenkopf
- (11): schwalbenschwanzförmige Nut
- (12): Klebemasse
- (13): Mutter
- (14): Scheibe
- (15): Verschraubung
- (16): Sackloch
- (17): außenliegender Bolzenteil
- (18): Hinterschneidung
- (19): Kopfvorsprung
- (20): mittlerer Bolzenteil
- (21): Spannring
- (22): Achse für Schrägbohrung
- (23): Schwingmetallkörper
- (24): Metallteil
- (25): Metallteil
- (26): elastischer Teil
- (27): Schulter
- (28): Schaftverjüngung
- (29): Klebstoffmasse
- (30): Verbindungmittel
- (31): Gewindebohrung
- (32): angeformter Verankerungsbolzen
- (39):
- (40): zurückversetzte Wand
- (41): vorstehende Wandfläche
- (42): Plattenfugen
- (43): rückseitige Platte
- (44): Rand
- (45): Frontalscheibe (außenliegende Scheibe)
- (46): vorstehender Bereich
- (47): Isolierglas
- (48): innenliegende Scheibe
- (49): Schicht

## Patentansprüche

1. Fassadenplatte (1) zur Bildung einer Fassadenkonstruktion für Hochbauten mit einer aus einem Einscheiben-Sicherheitsglas bestehenden Scheibe, in welcher Löcher (11, 16) zur formschlüssigen Aufnahme von über die Plattenrückseite (9) vorstehende Verankerungsbolzen (5) vorgesehen sind, die mit einer Unterkonstruktion (2) verbindbar sind, dadurch **gekennzeichnet,** daß das einzelne Loch (11, 16) eine nach der Platten-Rückseite (9) offene, sich in Richtung zur Plattenvorderseite (38) erweiternde, aber die Plattenvorderseite (38) nicht durchdringende Form hat, in welches der Verankerungsbolzen unter Zwischenfügung einer Klebemasse (12) drehschlüssig sowie druck- und zugfest eingesetzt ist, wobei sich die Löcher (11, 16) bei mehrscheibigen Fassadenplatten (1) in der jeweils außenliegenden, thermisch vorgespannten Scheibe (45) befinden und die mit der Unterkonstruktion (2) werkseitig als körperliche Einheit, gegebenenfalls mit zusätzlicher Verklebung hergestellte Fassadenplatte (1) mit einem an der Gebäudeaußenwand (4) befestigten Trägerrost verbindbar ist.

2. Fassadenkonstruktion nach Anspruch 1, dadurch **gekennzeichnet,** daß die Löcher (11, 16) in die Einscheiben-Sicherheitsglasplatte (1) vor dem Härten durch Bohren oder/und Fräsen eingebracht sind.

3. Fassadenkonstruktion nach Anspruch 1 oder 2, dadurch **gekennzeichnet,** daß das einzelne Loch (16) als gebohrtes Sackloch gestaltet ist dessen Hinterschneidung (18) durch zusätzliche Schrägbohrungen (22) gebildet ist.

4. Fassadenkonstruktion nach Anspruch 3, dadurch **gekennzeichnet,** daß der in das hinterschnittene Sackloch (16) einzuführende Verankerungsbolzen (5) in Längsrichtung dreigeteilt ist, dessen außienliegende Bolzenteile (17) je einen in die Hinterschneidung (18) des Sackloches (16) eingreifenden Kopfvorsprung (19) aufweisen und dessen mittlerer Bolzenteil (20) als Spreizelement ausgebildet ist.

5. Fassadenkonstruktion nach Anspruch 1 oder einem der folgenden, dadurch **gekennzeichnet,** daß das einzelne Loch (11) als Teil eines vom seitlichen Plattenrand her in die Fassadenplatte (1) eingefrästen, im Querschnitt beispielsweise schwalbenschwanzförmigen, nach der Plattenrückseite (9) hin offenen Schlitzes vorgesehen ist.

6. Fassadenkonstruktion nach Anspruch 5, dadurch **gekennzeichnet,** daß der in den Schlitz (11) einführbare Verankerungsbolzen (5) einteilig ausgebildet ist und einen im Schlitz drehschlüssig geführten, verbreiterten Bolzenkopf (10) aufweist.

7. Fassadenkonstruktion nach Anspruch 1 oder einem der folgenden, dadurch **gekennzeichnet,** daß der Verankerungsbolzen (5, 33) aus korrosionsbeständigem Metall, beispielsweise Edelstahl, besteht.

8. Fassadenkonstruktion nach Anspruch 1 oder einem der folgenden, dadurch **gekennzeichnet,** daß die Fassadenplatte (1) über die Verankerungsbolzen (5) mit der einen Seite (24) von Schwingmetallkörpern (23) verbunden ist, wohingegen die andere Seite (25) der Schwingmetallkörper (23) an der Unterkonstruktion (2) befestigbar ist.

9. Fassadenkonstruktion nach Anspruch 8 dadurch **gekennzeichnet,** daß der Verankerungsbolzen (5) als drehschlüssig sowie druck- und zugfest in die Fassadenplatte (1) eingesetzter Schraubbolzen ausgebildet ist, auf den jeweils ein einzelner, eine Gewindebohrung (31) aufweisender Schwingmetallkörper (23) aufschraubbar ist.

10. Fassadenkonstruktion nach Anspruch 8 **gekennzeichnet** durch leistenförmige Schwingmetallkörper (23) mit angeformten Verankerungsbolzen (32), die in hinterschnittene Sacklöcher (16) der Fassadenplatte (1) eingreifen und dort durch eine aushärtende Klebstoffmasse (29) formschlüssig sowie druck- und zugfest gehalten sind.

11. Fassadenkonstruktion nach Anspruch 10 dadurch **gekennzeichnet,** daß der in das Sackloch (16) eingreifende Teil des einzelnen Verankerungsbolzens (32) mindestens einen sich verjüngenden Schaftbereich (28) zur widerhakenförmigen Abstützung an der Klebstoffmasse (29) aufweist.

12. Fassadenkonstruktion nach Anspruch 8 oder einem der folgenden, dadurch **gekennzeichnet,** daß die Stirnfläche (37) des Schwingmetallkörpers (23) mit dem gegenüberliegenden Flächenbereich (38) der Fassadenplatte (1) verklebt ist.

13. Fassadenkonstruktion nach Anspruch 8 oder einem der folgenden dadurch **gekennzeichnet,** daß der Schwingmetallkörper (23) an einer zurückversetzt angeordneten Wand (40) der Unterkonstruktion (2) befestigt ist.

14. Fassadenkonstruktion nach Anspruch 1 oder einem der folgenden, dadurch **gekennzeichnet,** daß bei einer mehrscheibigen Fassadenplatte die außenliegende Scheibe als Sicherheitsglas-Platte (1) mit den daran befestigten Verankerungsbolzen (5) und die dem Gebäude zugekehrten Scheiben als Isolierglas (47) ausgebildet sind.

15. Fassadenkonstruktion nach Anspruch 14 dadurch **gekennzeichnet,** daß die außenliegende Scheibe (45) ein das Isolierglas (47) mindestens seitlich überragendes Format aufweist, und daß die Verankerungsbolzen (5) im Eckenbereich der außenliegenden Scheibe (45) angeordnet sind und an den Rändern des Isolierglases vorbeigeführt sind.

## Claims

1. Façade plate (1) for forming a façade construction for high-rise buildings having a pane comprising a one-pane safety glass in which there are provided holes (11, 16) for receiving, with form fit, anchoring pins (5) projecting beyond the rear side (9) of the plate and being connectable to a sub-construction (2), characterized in that the individual hole (11, 16) has a shape such that it is open towards the rear side (9) of the plate, widening in the direction of the front side (38) of the plate but not penetrating the front side (38) of the plate, in which hole (11, 16) the anchoring pin is inserted with interposition of an adhesive composition (12) so that it is non-rotatable as well as push-resistant and pull-resistant, the holes (11, 16) in the case of multi-pane façade plates (1) being located in the respectively outer, thermally pre-stressed pane (45) and the façade plate (1), where appropriate with additional adhesive, being manufactured at the factory as a physical unit with the sub-construction (2) and being connectable to a support grid secured to the outer wall (4) of the building.

2. Façade construction according to Claim 1, characterized in that the holes (11, 16) are inserted in the one-pane safety glass plate (1) by means of drilling or/and milling before it hardens.

3. Façade construction according to Claim 1 or 2, characterized in that the individual hole (16) is constructed as a drilled blind hole, the undercut (18) of which is formed by means of additional diagonal drilled holes (22).

4. Façade construction according to Claim 3, characterized in that the anchoring pin (5) to be inserted in the undercut blind hole (16) is divided, in the longitudinal direction, into three parts, the outer pin parts (17) of which each have a head projection (19) engaging in the undercut (18) of the blind hole (16), and the central pin part (20) of which is constructed as a spreading element.

5. Façade construction according to Claim 1 or one of the subsequent claims, characterized in that the individual hole (11) is provided as part of a slot which, seen from the lateral plate edge, is milled into the façade plate (1), is for example of dovetail-shaped cross-section, and is open towards the rear side (9) of the plate.

6. Façade construction according to Claim 5, characterized in that the anchoring pin (5) which may be inserted in the slot (11) is constructed as one part and has a broadened pin head (10) guided non-rotatably in the slot.

7. Façade construction according to Claim 1 or one of the subsequent claims, characterized in that the anchoring pin (5, 33) is of a corrosion-resistant metal, for example refined steel.

8. Façade construction according to Claim 1 or one of the subsequent claims, characterized in that the façade plate (1) is connected via the anchoring pins (5) to one side (24) of rubber-metal anti-vibration bodies (23), whereas the other side (25) of the rubber-metal anti-vibration bodies (23) may be secured to the sub-construction (2).

9. Façade construction according to Claim 8, characterized in that the anchoring pin (5) is constructed as a screw pin inserted in the façade plate (1) so that it is non-rotatable as well as push-resistant and pull-resistant, and onto which an individual rubber-metal anti-vibration body (23) having a threaded bore (31) may in each case be screwed.

10. Façade construction according to Claim 8, characterized by strip-type rubber-metal anti-vibration bodies (23) having anchoring pins (32) integrally formed thereon which engage in undercut blind holes (16) in the façade plate (1) and are held there by means of a curing adhesive composition (29) with form fit and so that they are push-resistant and pull-resistant.

11. Façade construction according to Claim 10, characterized in that the part of the individual anchoring pin (32) engaging in the blind hole (16) has at least one tapering shaft region (28) for barb-type support against the adhesive composition (29).

12. Façade construction according to Claim 8 or one of the subsequent claims, characterized in that the end face (37) of the rubber-metal anti-vibration body (23) is stuck with adhesive to the opposite face region (38) of the façade plate (1).

13. Façade construction according to Claim 8 or one of the subsequent claims, characterized in that the rubber-metal anti-vibration body (23) is secured to a set-back wall (40) of the sub-construction (2).

14. Façade construction according to Claim 1 or one of the subsequent claims, characterized in that, in the case of a multi-pane façade plate, the outer pane is constructed as a safety glass plate (1) having the anchoring pins (5) secured thereto, and the panes facing the building are constructed as insulating glass (47).

15. Façade construction according to Claim 14, characterized in that the outer pane (45) has a format such that it projects at least laterally beyond the insulating glass (47), and in that the anchoring pins (5) are arranged in the corner region of the outer pane (45) and are guided past the edges of the insulating glass.

## Revendications

1. Panneau de façade (1) servant à former une construction de façade pour des bâtiments, comportant une vitre formée d'un verre trempé, dans laquelle des trous (11,16) sont ménagés de manière à recevoir, selon une liaison par formes complémentaires, des boulons d'ancrage (5), qui font saillie sur la face arrière (9) du panneau et peuvent être raccordés à une construction sous-jacente (2), caractérisé par le fait que le trou individuel (11,16) possède une forme qui s'ouvre en direction de la face arrière (9) du panneau, s'élargit en direction de la face avant (38) de ce panneau, mais ne traverse pas cette face avant, et que le boulon d'ancrage est inséré dans ce trou selon une liaison résistante à la compression et à la traction et avec blocage en rotation moyennant l'interposition d'une masse de colle (12), les trous (11,16) présents dans des panneaux de façade (1) comportant plusieurs vitres, étant situés respectivement dans la vitre extérieure (45), qui est précontrainte thermiquement, et que le panneau de façade (1), fabriqué en usine de manière à former, avec la construction sous-jacente (2) une unité de construction, éventuellement moyennant un collage supplémentaire, peut être raccordé à une grille de support fixé à la paroi extérieure (4) du bâtiment.

2. Construction de façade suivant la revendication 1, caractérisée par le fait que les trous (11,16) sont ménagés dans le panneau en verre (31) avant durcissement, par perçage et/ou fraisage.

3. Construction de façade suivant la revendication 1 ou 2, caractérisé par le fait que le trou individuel (16) est agencé sous la forme d'un trou borgne, dont la partie en dépouille (18) est formée par des perçages obliques supplémentaires (22).

4. Construction de façade suivant la revendication 3, caractérisée par le fait que le boulon d'ancrage (5), qui peut être introduit dans le trou borgne en dépouille (16) est subdivisé, dans la direction longitudinale, en trois éléments, parmi lesquels les éléments extérieurs (17) possèdent chacun une partie saillante de tête (19) qui s'engage dans la partie en dépouille (18) du trou borgne (16) et dont la partie médiane (20) est réalisée sous la forme d'un élément d'écartement.

5. Construction de façade suivant la revendication 1 ou l'une des revendications suivantes, caractérisée par le fait que le trou individuel (11) est prévu en tant que partie d'une fente qui est ménagée par fraisage dans le panneau de façade (1) à partir d'un bord latéral du panneau, possède par exemple une forme en queue d'aronde en coupe transversale et s'ouvre en direction de la face arrière (9) du panneau.

6. Construction de façade suivant la revendication 5, caractérisée par le fait que le boulon d'ancrage (5), qui peut être introduit dans la fente (11), est formé d'un seul tenant et possède une tête élargie (10), qui est guidée avec un blocage en rotation dans la fente.

7. Construction de façade suivant la revendication 1 ou l'une des suivantes, caractérisé par le fait que le boulon d'ancrage (5,33) est réalisé en un métal résistant à la corrosion, par exemple de l'acier traité.

8. Construction de façade suivant la revendication 1 ou l'une des suivantes, caractérisée par le fait que le panneau de façade (1) est raccordé, au moyen des boulons d'ancrage (5), à une face (24) de corps en caoutchouc-métal (23), tandis que l'autre face (25) des corps en caoutchouc-métal (23) peut être fixée à la construction sous-jacente (2).

9. Construction de façade suivant la revendication 8, caractérisée par le fait que le boulon d'ancrage (5) est agencé sous la forme d'un boulon fiteté qui est inséré avec blocage en rotation et de manière à résister à la compression et à la traction dans le panneau de façade (1) et sur lequel peut être vissé respectivement un corps en caoutchouc-métal individuel (23), qui possède un trou taraudé (31).

10. Construction de façade suivant la revendication 8, caractérisée par des corps en caoutchouc-métal (23) en forme de barrettes, sur lesquels sont formés par moulage des boulons d'ancrage (32), qui s'engagent dans des trous borgnes en dépouille (16) du panneau de façade (1) et y sont retenus selon une liaison par formes complémentaires et d'une manière résistant à la compression et à la traction, par une masse de colle durcissable (29).

11. Construction de façade suivant la revendication 10, caractérisée par le fait que la partie qui s'engage dans le trou (37) du boulon d'ancrage individuel (32) possède au moins une partie en forme de tige rétrécie (28) destinée à prendre appui, sous la forme d'un crochet, dans la masse de colle (29).

12. Construction de façade suivant la revendication 8 ou l'une des revendications suivantes, caractérisée par le fait que la face frontale (37) du corps en caoutchouc-métal (23) est collée à la zone superficielle opposée (38) du panneau de façade (1).

13. Construction de façade suivant la revendication 8 ou l'une des revendications suivantes, caractérisée par le fait que le corps en caoutchouc-métal (23) est fixé à une paroi (40), décalée en retrait, de la structure sous-jacente (2).

14. Construction de façade suivant la revendication 1 ou l'une des revendications suivantes, caractérisée par le fait que, dans le cas d'un panneau de façade comportant plusieurs vitres, la vitre extérieure est réalisée sous la forme d'une plaque de verre trempé (1) à laquelle sont fixés des boulons d'encrage (5), et que la vitre située du côté du bâtiment est réalisée sous la forme d'un verre isolant (47).

15. Construction de façade suivant la revendication 14, caractérisée par le fait que la vitre extérieure (45) possède un format qui fait saillie au moins latéralement par rapport au verre isolant (44), et que les boulons d'ancrage (5) sont disposés dans la zone d'angle de la vitre extérieure (45) et passent devant les bords du verre isolant.
